**Europäisches Patentamt**

**European Patent Office**

**Office européen des brevets**

(19)

(11) Veröffentlichungsnummer: **0 148 421**
**A2**

# EUROPÄISCHE PATENTANMELDUNG

(12)

(21) Anmeldenummer: **84114824.0**

(22) Anmeldetag: **06.12.84**

(51) Int. Cl.⁴: **A 01 C 5/06**

(30) Priorität: **21.12.83 DE 3346173**

(43) Veröffentlichungstag der Anmeldung: **17.07.85**
**Patentblatt 85/29**

(84) Benannte Vertragsstaaten: **AT FR GB IT NL**

(71) Anmelder: **Franz Kleine Maschinenfabrik GmbH & Co.,**
**Ferdinand-Henze-Strasse, D-4796 Salzkotten (DE)**

(72) Erfinder: **Kaup, Ferdinand, Ing. grad., Zur alten**
**Buche 19, D-4791 Wünnenberg-Helmern (DE)**
Erfinder: **Gernoth, Waldemar, Ing. grad., Holzweg 20,**
**D-4790 Paderborn-Elsen (DE)**

(74) Vertreter: **Patentanwälte Dipl.-Ing. Rudolf Bibrach**
**Dipl.-Ing. Elmar Rehberg, Postfach 1453 Pütterweg 6,**
**D-3400 Göttingen (DE)**

(54) **Schar für Sämaschinen.**

(57) Die Erfindung betrifft eine Schar für Sämaschinen zur Bildung der Saatfurche, mit sich an die in den Boden eindringende Schneidkante anschließenden Scharflanken für das Offenhalten der Furche zum Einlegen der Samenkörner, wobei das Schar hinter der Schneidkante das Furchenprofil bildende Leitflächen aufweist, indem sich an den keilförmigen, die Furche öffnenden Teil des Schares ein, durch ebene Leitflächen begrenztes Scharteil von gleichbleibendem Querschnitt anschließt, wobei erfindungsgemäß das Schar über seine Länge hinaus in Zonen (A bis C) aufgeteilt ist, von denen in der sich an die Scharvorderkante (5) anschließenden Öffnungszonen (A) der Scharkörper nach vorn und unten spitz verläuft und in einer sich anschließenden Stabilisierungszone (B) der Scharkörper das gewünschte Furchenprofil bildende Leitflächen vorgesehen sind, während in den nachfolgenden Zonen, den Verjüngungszonen (C), die Seitenwandungen des Scharkörpers gegenüber dem größten Scharquerschnitt zurücktreten.

Schar für Sämaschinen

Die Erfindung betrifft ein Schar für Sämaschinen zur Bildung
der Saatfurche mit sich an die in den Boden eindringende
Schneidkante anschließenden Scharflanken zum Offenhalten
der Furche für das Einlegen der Samenkörner. Bei den üblichen Scharen von Sämaschinen ergibt sich der Nachteil,
daß insbesondere bei trockenem Boden die gezogene Furche
infolge Rückfedern des Bodens wieder zusammenfällt, oder daß
das Schar stopft und dadurch die Samenkörner nicht mehr in
die Furche gelangen können, sondern auf der Bodenoberfläche
verbleiben, wo sie Wind und Wetter ausgesetzt sind und von
Tieren aufgenommen werden können.

Aufgabe der Erfindung ist es, den durch ungenügende Furchenbildung hervorgerufenen Saatgutverlust zu umgehen und ein
Schar zu schaffen, welches nicht stopft und eine exakte, für
das ordnungsgemäße Einlegen der Samenkörner geeignete, Furche
bildet.

Dies wird erfindungsgemäß dadurch erreicht, daß das Schar
hinter der Schneidkante das gewünschte Furchenprofil bildende
Leitflächen aufweist, indem sich an den keilförmigen, die
Furche öffnenden Teil des Schares ein durch ebene Leitflächen
begrenztes Scharteil von gleichbleibendem Querschnitt und an
diesen ein weiterer Teil anschließt, dessen Querschnitt sich
nach hinten hin wieder gleichmäßig verjüngt.

Vorzugsweise ist das Schar über seine Länge hinaus in
Zonen aufgeteilt, von denen in der sich an die Scharvorderkante anschließenden Zone, der sog. Öffnungszone, der Schar-

körper nach vorn und unten spitz verläuft und in einer, sich anschließenden Zone, der sog. Stabilisierungszone, der Scharkörper das gewünschte Furchenprofil bildende Leitflächen vorgesehen sind, während in den nachfolgenden Zonen, den sog. Verjüngungszonen, die Seitenwandungen des Scharkörpers gegenüber dem größten Scharquerschnitt zurücktreten.

Dabei sind die Leitflächen des Scharkörpers im Bereich der zweiten Zone durch in Arbeitsrichtung parallel zueinander verlaufende Außenflächen begrenzt, während sämtliche sich an den Bereich des größten Scharkörperquerschnittes anschließende Zonen im Furchenbereich einen geringeren Querschnitt aufweisen. Schließlich ist der gesamte Scharkörper so ausgebildet, daß die Eindringtiefe des Schares nach hinten hin abnimmt.

Der Erfindungsgedanke läßt die verschiedensten Ausführungsmöglichkeiten zu. Eine davon ist in der anliegenden Zeichnung wiedergegeben, und zwar zeigen:

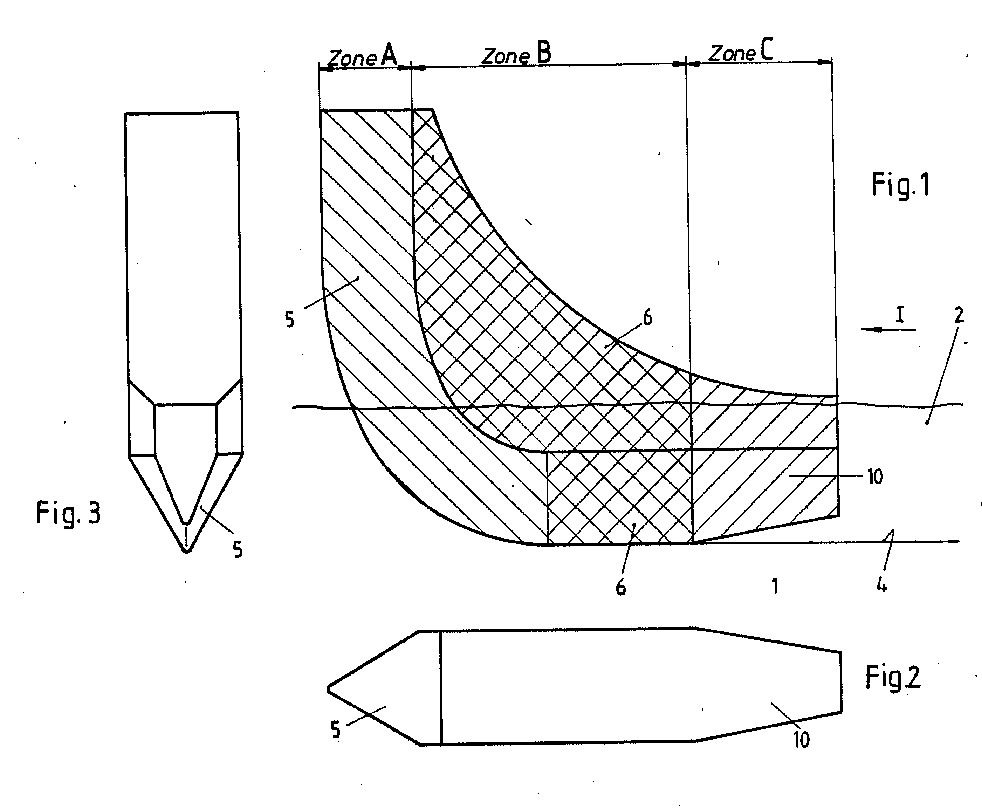

Fig. 1    eine schematische Seitenansicht eines Schares für Sämaschinen;

Fig. 2    eine Draufsicht auf das Schar gemäß Fig. 1    und

Fig. 3    Ansichten auf das Schar in Richtung des Pfeiles I gemäß Fig. 1 gesehen.

Das Schar sitzt an der Unterseite der Sämaschine und hat die Aufgabe, im Ackerboden 1 zunächst eine durchgehende Furche 2 zu bilden, die die hinter dem Schar zugeführten Samenkörner aufnehmen soll. Wichtig ist, daß die Furche so weit Bestand hat, daß das Saatgut bis auf den Furchengrund 4 gelangen kann.

- 3 -

Die Tiefe der Furche hängt von der Einstellung des Schares
bzw. der Sämaschine ab.

Am vorderen Ende weist das Schar ein entsprechend gebogenes
Scharsech 5 auf, welches aus verschleißfestem Material besteht
und nach vorn und zum Boden hin keilförmig ausgebildet und mit
einer verhältnismäßig scharfen Vorderkante versehen ist. An
das Scharsech 5, welches auf seiner rückwärtigen Seite entsprechend ausgebildet ist, setzen sich die Scharseitenbleche
6 an, die so weit voneinander entfernt bzw. so angeordnet sind,
daß sich eine seitliche Verdickung des Schars ergibt, die über
das gewünschte Furchenprofil hinausreicht, so daß beim Ziehen
der Furche eine Verdichtung des Bodens im Bereich der Furchenseitenwände erreicht wird. Die Samenkörner, die hinter dem
Schar zugeführt werden, können ungehindert in die Furche übertreten. Verstopfungen sind durch die erfindungsgemäße Ausbildung des Schars vermieden.

In der Zone A, der sog. Öffnungszone, ist das Schar bzw. das
Scharsech 5 nach vorn und unten hin spitz auslaufend zum Öffnen
und Vorverfestigen des Erdreiches nach den Seiten und nach
unten hin.

In der Zone B erfolgt durch das Schar ein Komprimieren und
Stabilisieren des Erdreiches nach unten und zur Seite hin.
Der stabilisierende Effekt läßt sich dadurch sichern, daß
die Zone B relativ lang gehalten wird.

In der Zone C ist das Schar nach hinten hin in allen Ebenen
verjüngt, um ein zu starkes Zurückfedern des Bodens und ein
Nachfallen von Erde zu verhindern. Es ist hier am Scharende eine Art Schwanz 10 ausgebildet, der verhindert, daß lose
Erde in die geöffnete Furche 2 von der Bodenoberseite her
zurückfällt.

Die gezeigte Gestaltung des Schares bietet die Gewähr dafür, daß eine, zumindest während des Sävorganges, offene
Furche 2 gebildet wird, die das Einlegen der Samenkörner
durch das Schar hindurch jederzeit gewährleistet. Die sonst
üblichen Verstopfungen des Schares sind ausgeschlossen. Durch
hinter dem Schar angeordnete, nicht dargestellte Zustreicher
wird die Furche 2 ordnungsgemäß über dem eingelegten Saatgut
wieder geschlossen.

# BIBRACH & REHBERG

ANWALTSSOZIETÄT

BIBRACH & REHBERG, POSTFACH 14-53, D-3400 GÖTTINGEN

PATENTANWALT DIPL.-ING. RUDOLF BIBRACH
PATENTANWALT DIPL.-ING. ELMAR REHBERG

EUROPEAN PATENT ATTORNEYS
MANDATAIRES EN BREVETS EUROPÉENS

TELEFON: (0551) 45034/35

TELEX: 96616 bipat d

POSTSCHECKKONTO: HANNOVER
(BLZ 25010030) NR. 115763-301

BANKKONTEN: DEUTSCHE BANK AG GÖTTINGEN
(BLZ 26070072) NR. 01/85900
COMMERZBANK GÖTTINGEN
(BLZ 26040030) NR. 6425722

| IHR ZEICHEN | IHR SCHREIBEN VOM | UNSER ZEICHEN | D-3400 GÖTTINGEN, |
| YOUR REF. | YOUR LETTER | OUR REF. | PÜTTERWEG 6 |
| VOTRE REF. | VOTRE LETTRE | NOTRE REF. | |

0148421

Franz Kleine Maschinenfabrik GmbH & Co.,
Ferdinand-Henze-Str. 2, 4796 Salzkotten

Schar für Sämaschinen

Patentansprüche:

1. Schar für Sämaschinen zur Bildung der Saatfurche, mit sich an die in den Boden eindringende Schneidkante anschließenden Scharflanken für das Offenhalten der Furche zum Einlegen der Samenkörner, wobei das Schar hinter der Schneidkante das Furchenprofil bildende Leitflächen aufweist, indem sich an den keilförmigen, die Furche öffnenden Teil des Schares ein, durch ebene Leitflächen begrenztes Scharteil von gleichbleibendem Querschnitt anschließt, dadurch gekennzeichnet, daß das Schar über seine Länge hinaus in Zonen (A bis C) aufgeteilt ist, von denen in der sich an die Scharvorderkante (5) anschließenden Öffnungszone (A) der Scharkörper nach vorn und unten spitz verläuft und in einer sich anschließenden Stabilisierungszone (B) der Scharkörper das gewünschte Furchenprofil bildende Leitflächen vorgesehen sind, während in den nachfolgenden Zonen, den Verjüngungszonen (C), die Seitenwandungen des Scharkörpers gegenüber dem größten Scharquerschnitt zurücktreten.

2. Schar nach Anspruch 1, dadurch gekennzeichnet, daß die Leitflächen des Scharkörpers im Bereich der zweiten Zone (B) durch, in Arbeitsrichtung parallel zueinander verlaufende, Außenflächen begrenzt sind.

3. Schar nach Anspruch 1 und 2, dadurch gekennzeichnet, daß sämtliche sich an den Bereich des größten Scharkörperquerschnittes anschließenden Zonen (C) im Furchenbereich einen geringeren Querschnitt aufweisen.

4. Schar nach Anspruch 1 bis 3, dadurch gekennzeichnet, daß die Eindringtiefe des Scharkörpers nach hinten hin abnimmt.

Zone A   Zone B   Zone C

Fig.1

Fig.3

Fig.2

5

6

10

6

1

4

2

I

5

5

5

10

10

0148421